# EUROPEAN PATENT APPLICATION

(11) **EP 4 715 703 A1**
(43) Date of publication of application: **25.03.2026**
(21) Application number: 24201714.3
(22) Date of filing: 20.09.2024
(51) Int. Cl.: G06Q 10/10, G06Q 10/0631

(54) **SYSTEM AND METHOD BASED ON A GROUP OF LLM-BASED-AGENTS FOR GENERATION AND ENHANCEMENT OF ENGINEERING-DATA-FUNNEL OUTPUTS**

(71) Applicant: ABB SCHWEIZ AG, 5400 Baden (CH)
(72) Inventor: SCHOCH, Nicolai, 69120 Heidelberg (DE); ELSHEIKH, Mohamed, 68519 Viernheim (DE); ASHIWAL, Virendra, 68542 Heddesheim (DE)
(74) Representative: Maiwald GmbH

(57) **Abstract**

There is disclosed a method for obtaining a target structured representation of information from one or more documents indicative of a same process plant by using an interacting group of large language model, LLM, -based agents in an industrial plant context. The method comprises obtaining at least one document of the one or more documents at the group of LLM-based agents. Each LLM-based agent from the group of LLM-based agents is given one task and one role, and is associated with one or more data processing tools from a set of predetermined data processing tools based on the given task and role. The method comprises selecting two or more LLM-based agents from the group of LLM-based agents for processing the document; processing, by one selected agent of the selected two or more LLM-based agents, the document and outputting a structured representation of information as a result of the processing; interacting of the selected two or more LLM-based agents in relation to the structured representation of information and based on the tasks and roles given to the selected two or more LLM-based agents; and obtaining the target structured representation of information based on a result of the interacting.

## Description

### FIELD OF THE INVENTION

The invention relates to a method and a data processing apparatus for obtaining a target structured representation of information from one or more documents indicative of a same process plant by using an interacting group of large language model, LLM, - based agents in an industrial plant context. The invention further relates to a data processing system, a computer-readable medium, a computer program product and a use of the method and data processing apparatus.

### BACKGROUND

Engineering projects in an industrial plant context typically include different types of process data. Recently, there is a research trend in developing artificial intelligence (Al)-based approaches for automated processing of engineering data. However, there is always a certain uncertainty in the data processing and the processing results due to the variations in the data which needs to be processed and due to the inherent probabilistic nature of Al-based tools.

This poses a problem for the setting up of automated data processing workflows and computer systems in an industrial plant context. A highly varying process cannot be programmed, like hard-coded, beforehand for a machine or for an automated algorithm or system. This is mainly because such process is in general highly dependent on the actual data from respectively differing engineering projects.

Hence, there is room and need for improvement regarding the setting up of automated and flexible data processing workflows and computer systems in an industrial plant context.

Thus, it is an object of the present disclosure to overcome at least part of the drawbacks available regarding the setting up of automated and flexible data processing workflows and computer systems in an industrial plant context.

### SUMMARY

Therefore, to address one or more of these drawbacks as indicated above, there is provided, in a first aspect, a method for obtaining a target structured representation of information from one or more documents indicative of a same process plant by using an interacting group of large language model (LLM)-based agents in an industrial plant context. The method comprises obtaining at least one document of the one or more documents at the group of LLM-based agents. Each LLM-based agent from the group of LLM-based agents is given one task and one role, and is associated with one or more data processing tools from a set of predetermined data processing tools based on the given task and role. The method comprises selecting two or more LLM-based agents from the group of LLM-based agents for processing the document. The selecting comprises determining one or more types of information included in the document, and selecting LLM-based agents that are associated with data processing tools applicable for processing at least one type of information of the determined one or more types of information. The method further comprises processing, by one selected agent of the selected two or more LLM-based agents, the document and outputting a structured representation of information as a result of the processing. The method further comprises interacting of the selected two or more LLM-based agents in relation to the structured representation of information and based on the tasks and roles given to the selected two or more LLM-based agents. The interacting comprises modifying and/or approving the structured representation of information based on feedback provided on the structured representation of information by at least one further LLM-based agent of the selected two or more LLM-based agents as the one selected LLM-based agent. The method comprises obtaining the target structured representation of information based on a result of the interacting.

According to several examples of the present disclosure, an LLM-based agent may be a LLM Generative Al-based agent.

It shall be noted that the term "target" is used to differentiate between a structured representation of information or intermediate structured representation of information obtained from an LLM-based agent during or in course of the interacting. The target structured representation of information may be understood as a structured representation of information for which the interacting is completed and which may be outputted.

It shall be noted that by structured representation of information it is meat that information, which may be obtained from an unstructured representation like an input image, are represented in a structured way, which may be readable and/or understandable by a human person, but also by a computer, LLM-based agent or information model.

The one or more documents may be examples for such unstructured representations as mentioned above, i.e. in general such document may be understood as an unstructured representation. Further, such document may also be understood as an input document, a specification document, or an engineering design specification. The one or more documents are associated with a same process plant.

A task that may be given to an LLM-based agent may be to perform image processing, processing of descriptive text or textual information, processing of numerical values, processing of tables, evaluating results from other LLM-based agents, comparing results from other LLM-based agents, aggregating results from other LLM-based agents, forwarding results from other LLM-based agents, etc. Several more tasks are outlined in detail as examples further below. In general, by the term "task" it may be meant that an LLM-based agent is instructed or expected to perform certain types of data processing that are related to the task.

A role that may be given to an LLM-based agent may be a role of a primary or secondary (or any further) data processing LLM-based agent for example. For example, a primary LLM-based agent may be a first agent to process image data and a secondary LLM-based agent may be second agent to further process a result obtained from image processing performed by the primary LLM-based agent. A role may be linked with a task. For example, a LLM-based agent that is given the task to perform control operations for controlling several LLM-based agents may be given the role of a manager agent for example. Several more roles are outlined in detail as examples further below. In general, by the term "role" it may be meant that an LLM-based agent performs processing (or controlling) under considerations of one or more constraints.

A type of information may be at least one of image or image data, text or textual data, tables, numerical values, etc. It shall be noted that a document may comprise several different types of information, for example image data and textual data. For example, a topology image as image data may comprise notes or descriptive text as textual data, i.e. the notes may be used to further explain or describe certain symbols shown in the topology image.

The expression that an LLM-based agent is associated with data processing tools may be understood in that an LLM-based agent has a certain task and role and may, based on such certain task and role, or in order for executing such certain task and role, select certain (pre-assigned) processing tools. For example, an LLM-based agent that is given the task to perform image processing will have access to an image processing tool and will thus be able to access the image processing tool. Hence, the LLM-based agent for performing image processing is to be understood as being associated with the image processing tool. Said in other words, based on the tasks and roles, the LLM-based agents are associated with certain processing tools, i.e. have access to certain processing tools which they may need to fulfill or satisfy their tasks and roles.

By applicable data processing tool it is meant that a data processing tool is able to process the type of information included in the document. For example, for a document comprising an image or being indicative of image data, an applicable data processing tool is a data processing tool with which the LLM-based agent may perform image processing.

Interacting may comprise any communication between different LLM-based agents, any transmission of data or (intermediate) processing results and/or any controlling of one or more LLM-based agents by one or more other LLM-based agents.

The interacting in relation to the structured representation of information may be understood in that certain LLM-based agents may interact with each other for further processing a certain structured representation of information. Said in other words, based on a content of the structured representation of information, the interacting may take place between certain LLM-based agents. For example, for a structured representation of information that comprises information about tanks, boiler or valves, an interacting may take place between LLM-based agents that themselves have generated structured representations of information that comprise information about such tanks, boiler or valves. Moreover, in case the structured representation of information is obtained from a certain type of information, for example from image data, the interacting may take place between several LLM-based agents that may perform image processing. Moreover, in case the structured representation of information is obtained from two or more certain types of information, for example from image data and from textual data, the interacting may take place between several LLM-based agents that may perform image processing and text processing, respectively.

By feedback it may be meant, for example, that two LLM-based agents process a same document and obtain different output results, i.e. different structured representations of information. A difference may be more than a predetermined (absolute or relative) threshold value. For example, one of the two LLM-based agents may have the role of an evaluation agent and evaluates the results provided by the other of the two LLM-based agents. In case the predetermined threshold value may be violated, the evaluation agent may output such violation as feedback, for example to the other LLM-based agent. As another example, the two LLM-based agents may be a text processing LLM-based agent and an image processing LLM-based agent for example and their respective output results are evaluated by a third LLM-based agent, for example by a synthesizer LLM-based agent. Alternatively, instead of a same document, the two LLM-based agents may process different documents for a same process plant, and may evaluate a same content of information. For example, in both documents, a same "tank" is illustrated or described, and the synthesizer LLM-based agent obtains in both output results an evaluation, for example a confidence value, for the "tank". In case a potential difference violates a predetermined threshold, for example the text processing LLM-based agent may have identified the one "tank" with a certainty of about 70% and the image processing LLM-based agent may have identified the one "tank" with a certainty of about 90%, there would be a difference in certainty of about 20%, which may lead to one or both of the LLM-based agents (being instructed for example) to perform a re-processing for example. In general, by feedback it may be meant any response from an LLM-based agent on an output result or structured representation of information generated by another LLM-based agent. Feedback may also be provided by a human person, for example by an expert engineer. Feedback may be triggered based on predetermined thresholds being violated or based on predetermined feedback rules or based on (human or machine-represented) domain expert knowledge. By feedback it may also be meant, for example, an instruction, for example an instruction that a text processing LLM-based agent or an image processing LLM-based agent (or any other modalities processing LLM-based agents) may receive from a manager agent or manager LLM-based agent and/or from a synthesizer agent or synthesizer LLM-based agent. The feedback or instruction may be to perform one or more (re)iterations for example. The synthesizer LLM-based agent may provide feedback or instructions based on a provided context that it receives from a respective LLM-based agent. For example, (re)iteration may be provided as feedback or may be instructed in case a result in a generated structured representation of information may have a confidence value (for example, as a result in the generated structured representation of information, it may be indicated that a symbol in an input document may be identified with a certain confidence or certainty to represent a "tank") below a predetermined confidence threshold value.

Throughout the present disclosure, an LLM-based agent in the group of LLM-based agents may be enabled (based on its task, role, and tool access) to process a document, e.g. an input document. However, by an LLM-based agent processing an input document, it is meant a direct and indirect processing of the input document. For example, by direct processing, the LLM-based agent receives the document as input and processes the received document. By indirect processing, the LLM-based agent receives a result or structured representation of information from another LLM-based agent that has (directly or indirectly) processed the document.

The method according to the first aspect is advantageous in that it may participate in enabling to further reduce a manual work of a human engineering expert to process and evaluate or validate outputs from an LLM-based agent. Furthermore, internal discussions of the group-of-agents' may be provided to the user, so the user is enabled to follow the reasoning of the agents, and to interact where needed, and so the user is enabled to always refer back to the respectively made decisions of the agents if needed in the post- or further processing. The group of agents is further advantageous over a single agent solution, since in the group of agents, the agents have different expert/focus roles and tasks, and may thus be accordingly differently equipped, trained, or fine-tuned. Thus, each agent from the group of agents may be understood as an "expert agent", which may be optimized for performing certain processing, for example by use of certain data processing tools. Hence, the group of agents is not just an arrangement of several same agents, but may rather be understood as a specifically selected and trained team of experts, all of which have their field of focus and expertise, that may support each other and may help each other to obtain, as the team of experts, a potentially best result.

According to several examples of the present disclosure, the at least one type of information may be at least one of an image, a descriptive text, a table, a numerical value, data indicative of an image, data indicative of a descriptive text, data indicative of a table, and data indicative of a numerical value. The group of predetermined data processing tools may comprise processing tools applicable for processing an image, a descriptive text, a table, a numerical value, data indicative of an image, data indicative of a descriptive text, data indicative of a table, and data indicative of a numerical value. The document may be an input document to be input into the group of LLM-based agents and is a document comprising at least one of an image, a descriptive text, a table, a numerical value, data indicative of an image, data indicative of a descriptive text, data indicative of a table, and data indicative of a numerical value in an industrial plant context. The document may be an engineering design specification.

Hence, the group of LLM-based agents is applicable to a great variety of different documents and different types of information. Thus, the more documents may be considered for the processing of the group of LLM-based agents, the more accurate the target representation of information may get.

According to several examples of the present disclosure, the interacting may comprise at least one of:
- assessing, by the at least one further LLM-based agent, the structured representation of information, and providing a result of the assessing as the feedback,
- comparing, by the at least one further LLM-based agent, the structured representation of information with another structured representation of information obtained from the document or from another document of the at least one document, and providing a result of the comparing as the feedback,
- discussing, by the at least one further LLM-based agent, the structured representation of information with another selected LLM-based agent from the selected two or more LLM-based agents, and providing a result of the discussing as the feedback, and
- iterating, by a selected LLM-based agent from the selected two or more LLM-based agents, a processing of the structured representation of information, and providing a result of the iterating as the feedback.

It shall be noted that by discussion it may be meant such discussion as feasible between different LLM-based agents based on their language understanding.

Hence, a comprehensive, detailed and complex interaction between the different LLM-based agents is possible, as would be possible in a group of human experts. Thus, a more accurate, reliable and comprehensive target representation of information may thus be obtained.

According to several examples of the present disclosure, the modifying may comprise continuing or repeating the modifying until the target structured representation of information satisfies predetermined criteria, based on the selected two or more LLM-based agents using their LLM-based understanding of result content and interaction.

It shall be noted that the modifying may be performed by several iterations. A number of iterations may be predetermined, for example a maximum number, or may be adjusted by a certain agent (e.g. manager agent) having such adjustment role, for example.

That predetermined criteria are satisfied comprises that a processing (or the interacting) will be finished, once the overall extracted structured representation of information, i.e. the target structured representation of information (e.g. from two input documents) is consistent and information included in the overall extracted structured representation of information do not contradict each other anymore, so that it can be merged without merge conflicts/contradictions, e.g., because the image processing agent and the text processing agent in the group of LLM-based agents both find a same set of equipment in their respective documents, and they optimally complement each other (e.g., the image agent finds the connections from the equipment/components, and the text agent finds intended min/max thresholds for the same components/equipment). Alternatively, it may also happen that the original input documents contradict each other. So that the above optimal case cannot possibly be reached. In this case, the criteria for finishing the modification would be: the LLM-based agents do not find a way (even when trying in different ways) to improve or dispel the found contradictions after a certain amount of iterations.

Regarding the using their LLM-based understanding of result content and interaction, it is comprised that the agents are basically LLMs (large language models), which can process text, in natural or structured language formats. And the result content and the artifacts of agent-interaction is in a text format, i.e. structured representation of information originating from the input documents, like input engineering design specification documents. Therefore, with the setup of having LLM-based agents processing the input documents and obtaining respectively structured representations (i.e., a textual content/format), these LLM-based agents can now understand the content and meaning of these representations and accordingly further process it by collaborating with each other and/or by discussing the obtained content. Said in other words, any interim output in the overall EDF process is in a textual format and hence can be processed/understood by an LLM-based agent.

Hence, a quality and reliability of the target representation of information may thus be increased.

According to several examples of the present disclosure, two or more LLM-based agents of the group of LLM-based agents, that are given different tasks and roles, are associated with the same set of data processing tools, from which they can arbitrarily chose.

It shall be noted that the LLM-based agent may individually select or choose a certain data processing tools (from the subset of tools which it has been given access to), which the LLM-based agent may consider suitable for processing a certain document or structured representation of information.

Hence, due to the individual selecting, it may be reacted on a quality of the input documents for example. Thus, a quality and reliability of the target structured representation of information may be even further increased

According to several examples of the present disclosure, the interacting may further comprise exposing at least one of the following of the interacting of the selected two or more LLM-based agents to a user: a process, a state of a processing, an intermediate result of a processing, a discussion among the selected two or more LLM-based agents, and a made decision of one of the selected two or more LLM-based agents.

Said in other words, the method comprises to expose, e.g., via console outputs, via a log file, or via a suitable user interface in an engineering tool data processing tool, an "internal discussion" among the group of LLM-based agents to the user, so that: the user can follow the reasoning of the agents, and can interact if/where needed; the user can always refer back to the respectively made decisions of the agents if needed in the post- or further processing.

It shall be noted that a user may have a full overview and knowledge of what is happening, i.e. what processing is performed and for what reasons, in the group of LLM-based agents.

Hence, a trust of the user in a certainty or confidentiality of the target structured representation of information is even further increased.

According to several examples of the present disclosure, each LLM-based agent of the group of LLM-based agents may have its own expert understanding, based on its role and task description and based on its language understanding capabilities.

Moreover, an LLM-based agent may be associated with one or more data processing tools further based on the definition of its role and task, specified by means of a suitable role and task description. For explanation, it may be imagined this role and task to be an introduction text, before it is provided with the actual problem. E.g., for an artificial intelligence chatbot, if the chatbot should write a poem about HipHop, a prompt may be as follows: "You are a fantastic poet and literature expert, and have knowledge about music styles like hiphop, rap, etc. When being asked to write poems, you apply nice rhymes and sophisticated stylistic means of poetry".

A further prompt may then be: "Please write me a poem about HipHop in France".

Hence, the introductory text is the "role"(from first prompt, "*You are...*") and the "task" (from further prompt, "*When being asked to...*")*.*

Hence, it is enabled that different documents may be individually processed in respectively most suitable way. Thus, certainty or confidentiality of the target structured representation of information is even further increased.

According to several examples of the present disclosure, the LLM-based agents of the group of LLM-based agents may be in a hierarchical setup comprising two or more hierarchy levels. In case of a hierarchical setup being present, the group of LLM-based agents may comprise a manager LLM-based agent, and wherein the method further comprises controlling, by the manager LLM-based agent, an interacting between the LLM-based agents of the group of LLM-based agents including the interacting between the selected two or more LLM-based agents.

It shall be noted that the hierarchical setup may comprise any hierarchical structure.

Hence, efficiency and control in the processing of documents and/or (intermediate) structured representations of information is increased.

According to several examples of the present disclosure, the group of LLM-based agents may comprise an aggregator LLM-based agent, and wherein the method further comprises aggregating, by the aggregator LLM-based agent, two or more structured representations of information output from the selected two or more LLM-based agents into one structured representation of information, wherein the target structured representation of information is obtained by the aggregator LLM-based agent based on a result of one or more aggregating processes.

It shall be noted that the aggregator LLM-based agent may also be understood as a synthesizer LLM-based agent or a synthesizer agent.

Hence, the aggregation or synthetization of results into a target result may be further optimized due to the application of the aggregator LLM-based agent that has the task or role (and potentially the accordingly required training or fine-tuning) to do such aggregating or synthesizing.

According to several examples of the present disclosure, the method may further comprise waiting of a selected LLM-based agent and/or of a data processing tool associated with the selected LLM-based agent for feedback provided by a human user in relation to a respectively generated processing result; and outputting the generated processing result based on the feedback provided by the human user.

It shall be noted that a processing of one or more LLM-based agents may be paused until an instruction or feedback from the human user is received.

Hence, an understandability and transparency of the target structured representation of information is even further increased. And hence, the ability of a human expert to manually influence (where needed/wanted) the to-the-largest-possible-extend automated data processing is further increased, too.

According to several examples of the present disclosure, any one or more of the LLM-based agents in the group of LLM-based agents may be a domain knowledge permitting, modifying or comparing LLM-based agent, with the domain knowledge permitting, modifying or comparing LLM-based agent having access to a predetermined domain knowledge representation system associated with a domain of interest, to a predetermined domain information model associated with the domain of interest and/or to a predetermined domain ontology associated with the domain of interest. The method may further comprise permitting, by the domain knowledge permitting, modifying or comparing LLM-based agent, a selected LLM-based agent to output a structured representation of information, if a content of information comprised by the structured representation of information is inside the domain of interest. The method may further comprise modifying, by the domain knowledge permitting, modifying or comparing LLM-based agent, a content of information comprised by a structured representation of information generated by a selected LLM-based agent to be inside the domain of interest. The method may further comprise comparing, by the domain knowledge permitting, modifying or comparing LLM-based agent, a content of information comprised by a structured representation of information generated by a selected LLM-based agent to be similar to or different from an item in the domain knowledge representation system.

Said in other words, the group of LLM-based agents may comprise one or more LLM-based agents serving as the domain knowledge permitting, modifying or comparing LLM-based agent. In view thereof, it should be noted that a specific agent having a specific task and role may be realized by one or more LLM-based agents.

It shall be noted that the domain knowledge permitting, modifying or comparing LLM-based agent may also be understood as an other modalities processing LLM-based agent or an other modalities processing agent.

Hence, a plurality of additionally further information may be gained from the one or more documents and may be provided to a user, for example via a user interface. Thus, a trust of the user in an obtained result is even further increased.

According to several examples of the present disclosure, the group of LLM-based agents may comprise a source finding LLM-based agent, and wherein the method further may comprise finding, by the source finding LLM-based agent, one or more sources of output results in the document, wherein the output results are included in a structured representation of information output by a selected LLM-based agent.

It shall be noted that the source finding LLM-based agent may also be understood as an other modalities processing LLM-based agent or an other modalities processing agent.

Hence, still further information may be gained from the one or more documents and may be provided to a user via. Thus, a trust of the user in an obtained result is even further increased.

According to a second aspect, there is provided a data processing apparatus for obtaining a target structured representation of information from one or more documents indicative of a same process plant in an industrial plant context. The data processing apparatus comprising one or more processors being configured to carry out the method of the first aspect.

The data processing apparatus according to the second aspect is advantageous in that it may participate in enabling to further reduce a manual work of a human engineering expert to process and evaluate or validate outputs from an LLM-based agent. Furthermore, internal discussions of the group-of-agents' may be provided to the user, so the user is enabled to follow the reasoning of the agents, and to interact where needed, and so the user is enabled to always refer back to the respectively made decisions of the agents if needed in the post- or further processing. The group of agents is further advantageous over a single agent solution, since in the group of agents, the agents have different expert/focus roles and tasks, and may thus be accordingly differently equipped, trained, or fine-tuned. Thus, each agent from the group of agents may be understood as an "expert agent", which may be optimized for performing certain processing, for example by use of certain data processing tools. Hence, the group of agents is not just an arrangement of several same agents, but may rather be understood as a specifically selected and trained team of experts, all of which have their field of focus and expertise, that may support each other and may help each other to obtain, as the team of experts, a potentially best result.

According to a third aspect, there is provided a data processing system for obtaining a target structured representation of information from one or more documents indicative of a same process plant in an industrial plant context. The data processing system comprising a data processing apparatus of the second aspect. Additionally or alternatively, the data processing system comprises means for carrying out the method of the first aspect.

The data processing system according to the third aspect is advantageous in that it may participate in enabling to further reduce a manual work of a human engineering expert to process and evaluate or validate outputs from an LLM-based agent. Furthermore, internal discussions of the group-of-agents' may be provided to the user, so the user is enabled to follow the reasoning of the agents, and to interact where needed, and so the user is enabled to always refer back to the respectively made decisions of the agents if needed in the post- or further processing. The group of agents is further advantageous over a single agent solution, since in the group of agents, the agents have different expert/focus roles and tasks, and may thus be accordingly differently equipped, trained, or fine-tuned. Thus, each agent from the group of agents may be understood as an "expert agent", which may be optimized for performing certain processing, for example by use of certain data processing tools. Hence, the group of agents is not just an arrangement of several same agents, but may rather be understood as a specifically selected and trained team of experts, all of which have their field of focus and expertise, that may support each other and may help each other to obtain, as the team of experts, a potentially best result.

According to a fourth aspect, there is provided an industrial plant comprising a data processing apparatus of the second aspect and/or a data processing system of the third aspect.

By "industrial plant", according to several examples, it may be meant an industrial plant, autonomous industrial plant or industrial production plant, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

The industrial plant according to the fourth aspect is advantageous in that it may participate in enabling to further reduce a manual work of a human engineering expert to process and evaluate or validate outputs from an LLM-based agent. Furthermore, internal discussions of the group-of-agents' may be provided to the user, so the user is enabled to follow the reasoning of the agents, and to interact where needed, and so the user is enabled to always refer back to the respectively made decisions of the agents if needed in the post- or further processing. The group of agents is further advantageous over a single agent solution, since in the group of agents, the agents have different expert/focus roles and tasks, and may thus be accordingly differently equipped, trained, or fine-tuned. Thus, each agent from the group of agents may be understood as an "expert agent", which may be optimized for performing certain processing, for example by use of certain data processing tools. Hence, the group of agents is not just an arrangement of several same agents, but may rather be understood as a specifically selected and trained team of experts, all of which have their field of focus and expertise, that may support each other and may help each other to obtain, as the team of experts, a potentially best result.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computer-readable medium according to the fifth aspect is advantageous in that it may participate in enabling to further reduce a manual work of a human engineering expert to process and evaluate or validate outputs from an LLM-based agent. Furthermore, internal discussions of the group-of-agents' may be provided to the user, so the user is enabled to follow the reasoning of the agents, and to interact where needed, and so the user is enabled to always refer back to the respectively made decisions of the agents if needed in the post- or further processing. The group of agents is further advantageous over a single agent solution, since in the group of agents, the agents have different expert/focus roles and tasks, and may thus be accordingly differently equipped, trained, or fine-tuned. Thus, each agent from the group of agents may be understood as an "expert agent", which may be optimized for performing certain processing, for example by use of certain data processing tools. Hence, the group of agents is not just an arrangement of several same agents, but may rather be understood as a specifically selected and trained team of experts, all of which have their field of focus and expertise, that may support each other and may help each other to obtain, as the team of experts, a potentially best result.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling to further reduce a manual work of a human engineering expert to process and evaluate or validate outputs from an LLM-based agent. Furthermore, internal discussions of the group-of-agents' may be provided to the user, so the user is enabled to follow the reasoning of the agents, and to interact where needed, and so the user is enabled to always refer back to the respectively made decisions of the agents if needed in the post- or further processing. The group of agents is further advantageous over a single agent solution, since in the group of agents, the agents have different expert/focus roles and tasks, and may thus be accordingly differently equipped, trained, or fine-tuned. Thus, each agent from the group of agents may be understood as an "expert agent", which may be optimized for performing certain processing, for example by use of certain data processing tools. Hence, the group of agents is not just an arrangement of several same agents, but may rather be understood as a specifically selected and trained team of experts, all of which have their field of focus and expertise, that may support each other and may help each other to obtain, as the team of experts, a potentially best result.

According to a seventh aspect, there is provided a use of at least one of a method of the first aspect, a data processing apparatus of the second aspect, a data processing system of the third aspect, an industrial plant of the fourth aspect, a computer-readable medium of the fifth aspect, and a computer program product of the sixth aspect.

The use according to the seventh aspect is advantageous in that it may participate in enabling to further reduce a manual work of a human engineering expert to process and evaluate or validate outputs from an LLM-based agent. Furthermore, internal discussions of the group-of-agents' may be provided to the user, so the user is enabled to follow the reasoning of the agents, and to interact where needed, and so the user is enabled to always refer back to the respectively made decisions of the agents if needed in the post- or further processing. The group of agents is further advantageous over a single agent solution, since in the group of agents, the agents have different expert/focus roles and tasks, and may thus be accordingly differently equipped, trained, or fine-tuned. Thus, each agent from the group of agents may be understood as an "expert agent", which may be optimized for performing certain processing, for example by use of certain data processing tools. Hence, the group of agents is not just an arrangement of several same agents, but may rather be understood as a specifically selected and trained team of experts, all of which have their field of focus and expertise, that may support each other and may help each other to obtain, as the team of experts, a potentially best result.

Optional features of the first aspect may form part of any of the second to seventh aspects, mutatis mutandis.

The method of the first aspect may be at least in parts computer implemented. Preferably, the method of the first aspect is computer implemented.

The computer-readable medium of the fifth aspect may have stored thereon the computer program product of the sixth aspect.

The term "obtaining", as used herein, may comprise, for example, receiving from another system, apparatus, entity or process; receiving via an interaction with a user; loading or retrieving from storage or memory; measuring or capturing using sensors or other data acquisition apparatuses or means.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates an Engineering Data Funnel, an artificial intelligence (Al) to process engineering design specification documents into a comprehensive structured representation of information according to several examples of the present disclosure;
- Figure 2 schematically illustrates a system and architecture for an interacting group of LLM-based agents according to several examples of the present disclosure;
- Figure 3 schematically illustrates a hierarchical setup for LLM-based agents of a group of LLM-based agents according to several examples of the present disclosure;
- Figure 4 illustrates a flowchart indicative of a method according to several examples of the present disclosure;
- Figure 5 shows a block diagram schematically illustrating a data processing apparatus according to several examples of the present disclosure; and
- Figure 6 to 14 illustrate an example overview for implementing the interacting group of LLM-based agents according to several examples of the present disclosure.

### DETAILED DESCRIPTION

According to several examples of the present disclosure, it is proposed to have a group of LLM-based agents to facilitate the data processing in a flexible way, using expert tools, and (re-)iterating over (interim-)results, until a final (satisfying) result is obtained.

According to several examples of the present disclosure, it is combined the power of language-models (underneath the (LLM-based) agents) and domain-specific tools (e.g., image processing or text processing tools), and it is thus opened new frontiers in engineering data processing.

Concretely, according to several examples of the present disclosure, it is proposed i.a. a system, method, and architecture setup for an interacting group-of-(LLM-based)-agents with suitable roles, tasks, and tool access, for the purpose of processing unstructured input data into structured and comprehensive representations of information. The unstructured input data may be one or more documents indicative of a same process plant. In more detail, the unstructured input data or the one or more documents indicative of a same process plant may be engineering design specifications associated with a same process plant for example.

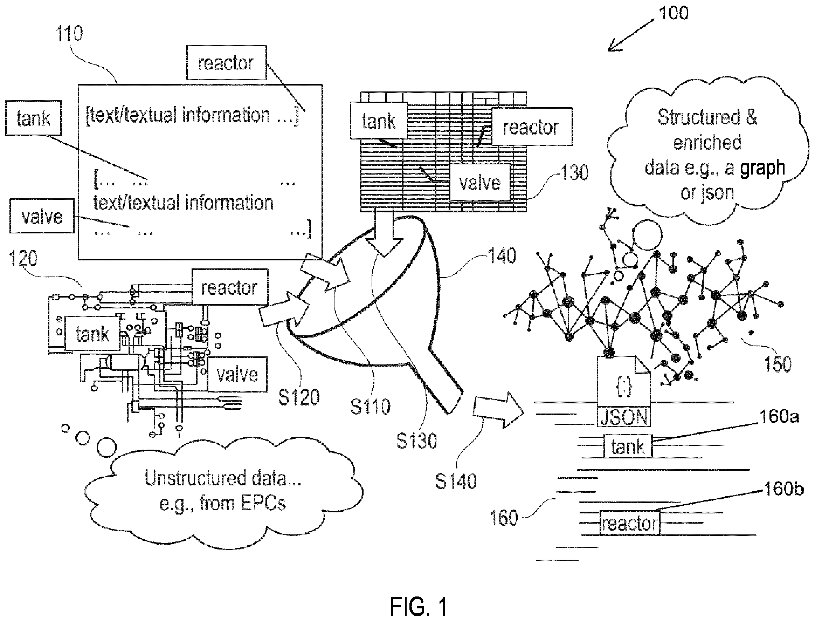

With the proposed system, it may be reduced the manual work of a human engineering expert to process and evaluate or validate output results from an Al agent, in particular, for example, from such "Engineering Data Funnel" (EDF) as outlined below in more detail with reference to Figure 1. It is thus facilitated the further automation of engineering data processing.

Al Agents and agentic workflows have been trending a lot for quite a while and are nowadays (with capable LLMs) still trending a lot. Particularly the idea of making the agentic workflows more robust via the combination with existing, possibly domain-specific, tools is highly promising.

In more detail, with reference to Figure 1, it should be noted that Automation Engineering of a process automation system in an industrial plant context is still a very manual effort due to limited support for the interpretation and processing of process design specification documents for example. Even though standards for digital data exchange between process and automation engineering do exist, those formats are rarely used and consequently the immense automation potential in automation engineering cannot be lifted.

With the "Engineering Data Funnel" (EDF) as illustrated in Figure 1, there is provided an Al-based approach and prototype - using an ontology-enhanced LLM-based agent and a mixture-of-experts system - to structure and formalize multimodal unstructured process design information as in PDF, Excel, and Word formats for example and make it available for state-of-the-art engineering tools for the long-known "Automation of Automation".

However, due to the inherent probabilistic nature of Al-based data processing, there is always a certain uncertainty in the data processing and the processing results.

Moreover, even though recent developments in NLP and Image Processing have been impressive, these models still sometimes show inconsistencies and problematic behavior, above all hallucinating facts and generating flawed or wrong output, but also behavior as simple and natural as misunderstanding of text and context, which a human engineer would understand differently, or misinterpretation of symbols, due to slight changes for example.

A human engineer could deal with these problems, based on his/her understanding and experience. For example, if there is a contradiction in what a tool, like an image processing tool for example, extracted from a Piping and Instrumentation Diagram (P&ID) and what another tool, like a language processing tool for example, extracted from a Control Narrative, then the engineer would go look at both and very likely find the problem and identify the correct solution.

Even though this is not a problem for a human engineer, because he/she can interact with tools and iterate over results, then possibly re-use tools, etc. this poses a problem for the automated data processing by means of a computer system. Such a process cannot be programmed, like hard-coded, beforehand for a machine or for an automated algorithm or system, as this is highly dependent on the actual data from the respectively differing engineering project. For example, mining P&IDs in Brazil may look different in terms of symbols used from those in Northern Europe.

Therefore, briefly summarizing the above, due to the inherent probabilistic nature of Al-based data processing, there is always a certain uncertainty in the data processing and the processing results. This poses a problem for the automated data processing by means of a computer system, in particular in an industrial plant context. A highly-varying process cannot be programmed, like hard-coded, beforehand for a machine or for an automated algorithm or system. This is mainly because such process may be highly dependent on actual data from the respectively differing engineering projects.

According to several examples of the present disclosure, it is therefore proposed to have a group of LLM-based agents to facilitate the data processing in a flexible way, using expert tools, and (re-)iterating over (interim-)results, until a final (satisfying) result is obtained.

For example, referring now to Figure 1, Figure 1 illustrates the EDF 140, which may be understood as being an artificial intelligence (Al) or an information model (IM) to process input data or input documents, for example engineering design specification documents, into a comprehensive structured representation according to several examples of the present disclosure.

In more detail, the EDF system 100 according to Figure 1 illustrates three different types of examples for input documents or engineering design specification documents, a first specification document 110 comprising textual information, a second specification document 120 comprising an image or topology image of several connected symbols and a third specification document 130 comprising a table. The specification documents 110, 120 and 130 may be understood as input documents, which are inputted to the EDF 140. The specification documents 110, 120 and 130 may be of data formats, for example the first specification document 100 may be in Word format, the second specification document 120 may be in PDF format and the third specification document 130 may be in Excel format. However, the specification documents are not limited to these types of formats. In general, it may be said that the specification documents 110, 120 and 130 may represent unstructured data, for example obtained from EPCs.

Each of the specification documents 110, 120 and 130 comprises one or more pieces of information. For example, among others, the first specification document 110 comprises pieces of information, i.e. textual information, related to a tank, a reactor and a valve. Further, among others, the second specification document 120 comprises pieces of information, i.e. connected symbols, related to a tank, a reactor and a valve. Moreover, among others, the third specification document 130 comprises pieces of information, i.e. content in rows, columns or cells of a table, related to a tank, a reactor and a valve.

The specification documents 110, 120 and 130 are input (in steps S110, S120 and S130 as indicated in Figure 1) to the EDF 140 and are processed by the EDF 140. As a result of the processing, the EDF 140 outputs, in S140, a structured representation.

At the processing in the EDF 140, the pieces of information, i.e. tank, reactor and valve, are identified in the specification documents 110, 120 and 130. It shall be noted that how specifically these pieces of information are identified in the specification documents 110, 120 and 130 does not form part of the present disclosure. However, several well-known LLM-based and/or image processing-based solutions may be used for identification of these (and/or other) pieces of information in the specification documents 110, 120 and 130.

The structured representation obtained from the EDF 140 may be understood to represent a representation of the joint information obtainable from the specification documents 110, 120 and 130. Alternatively, the structured representation obtained from the EDF 140 may be understood to represent a respective structured representation corresponding to each of the specification documents 110, 120 and 130. As a mere example only for improving understandability, the EDF 140 may have identified from the second specification document 120 based on image processing that a tank may be connected to a valve and that the valve may further be connected to a reactor. However, since the second specification document 120 may be of a low quality, for example the image may be pixelated, the connection of the tank to the reactor via the valve may be of low certainty. From the first specification document 110, the EDF 140 may learn for example with a higher certainty that the tank is indeed connected to the reactor via the valve, and from the third specification document 130, the EDF 140 may learn for example with a specific certainty a possible type of the tank and a possible type of the reactor. Thus, for example, the structured representation, which may be understood as a target structured representation, may comprise with comparatively higher certainty that a tank is connected to a reactor via a valve and that said tank and reactor may be of a certain type.

However, as already derivable therefrom, such obtained (target) structured representation still comprises uncertainties, in particular pieces of information associated with certain uncertainty (or certainty) values. Identifying, understanding and handling such uncertainties is a complex, time-consuming and error-prone task for a human engineer for example.

In general, one or more structured representations may be output by the EDF 140 in different ways or formats, for example in a structured visualization 150 or a structural textual information 160, like a JSON file.

In more detail, the EDF 140 or EDF system 100 may include (among others) a vision model trained to recognize components and/or symbols and connections in input documents, for example in P&ID documents like the first and second specification documents 110 and 120, for example as PDF files, image files. Additionally or alternatively, the EDF 140 or EDF system 100 may include a language model trained to process text in Control Narratives documents, for example in input documents like the specification documents 110, 120 and 130, for example, among others, in PDF files, texts, text files, or tables.

However, the EDF system 100 may never be perfect, and it may very likely struggle with certain symbols and/or connections (for example as shown in the second specification document 120) or with certain text paragraphs (for example as shown in the first specification document 110), e.g., when the symbols come in bad resolution, or are rotated, or simply differ from the training data, or, e.g., when the text/sentences are complex with multiple ambiguous relationships, which simply demand too much from the transformers' attention mechanism, etc.

In such cases for example, according to several examples of the present disclosure, it is therefore proposed to have a group of LLM-based agents to facilitate the data processing in a flexible way, using expert tools, and (re-)iterating over (interim-)results, until a final (satisfying) result is obtained.

Thus, said in other words, the EDF 140 of Figure 1 may comprise a group of LLM-based agents.

In more detail, according to several examples of the present disclosure, there is provided a group of LLM-based agents that may be understood as being able to act like a group of human engineers who can interact flexibly with tools, and re-iterate over obtained (interim) results, etc.

In view thereof, there is provided a group of LLM-based agents, who all have access to expert tools, like the image processing or text processing tools for example, which they can execute, and the results or structured results of which they can assess, compare, discuss, flexibly iterate over (for as long as needed or wanted), and flexibly improve until satisfied, thereby using their LLM-based understanding of result content and interaction.

It is therefore provided a group of such agents which work together like a group of humans, with a manager role and a set of expert roles for example, and possibly other roles. All such agents may have suitably defined tasks, which they can carry out by using a set of tools, respectively independently from each other.

The manager or supervisor agent in turn may then take care of having his expert agents interact with each other, to discuss their respective results, and to further iterate them, if needed, and to merge them finally, into an overall wanted output.

Hence, opposed to other approaches, said in other words, the present disclosure uses not only one LLM-based agent to manage the overall processing of data, but a group of such agents, each with its own expert understanding, to together process the data like a group of human experts, who can interact with each other and iterate over the results for as long as needed, or until satisfied.

With reference to Figure 1, for example, a first LLM-based agent from a group of LLM-based agents may be given a task to process input documents comprising an image (or data indicative of an image) as type of information, like the second specification document 120 for example, and may be given a role to perform the first image-based processing on such input document. A second LLM-based agent from the group of LLM-based agents may be given a task to also process input documents comprising an image (or image data as type of information), like the second specification document 120 for example, and may be given a role to further process or verify a processing result output by the first LLM-based agent, for example. According to another example, a third LLM-based agent from the group of LLM-based agents may be given a task to process input documents comprising text or numerical values (or data indicative of text of numerical values) as type of information, and may thus also process the second specification document 120 for example, if such second specification document 120 may also comprise text or numerical values as type of information. A fourth LLM-based agent from the group of LLM-based agents may be given a task to aggregate or combine the results output from the second and third LLM-based agents.

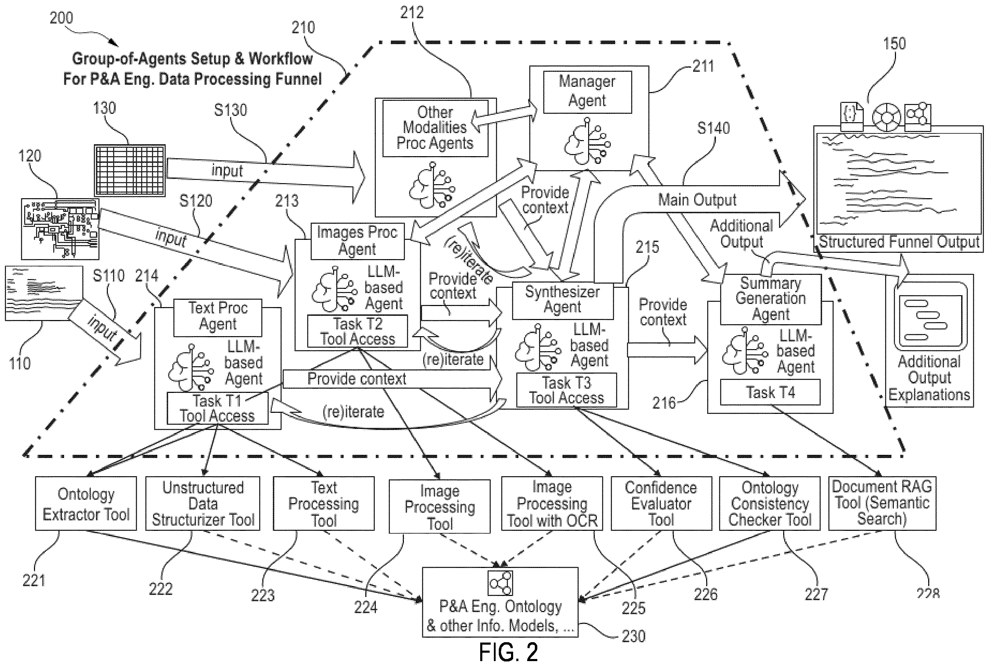

An example for an interacting of LLM-based agents of a group of LLM-based agents is illustrated in Figure 2. Thus, Figure 2 schematically illustrates a system 200 and architecture for an interacting group of LLM-based agents 210 according to several examples of the present disclosure.

In more detail, Figure 2 shows to an interacting group of LLM-based agents 210, which comprises a manager agent 211, other modalities processing agents 212, image processing agent 213, text processing agent 214, synthesizer agent 215, and summary generation agent 216. However, a number and/or types of different agents is not limited to this example and the group of agents 210 can comprise more agents and/or different agents.

Moreover, the group of agents 210 may have access to a set of predetermined processing tools, for example to an ontology extractor tool 221, an unstructured data structurizer tool 222, a text processing tool 223, an image processing tool 224, an image processing tool with OCR 225, a confidence evaluator tool 226, an ontology consistency checker tool 227, and a document RAG tool (semantic search) 228. However, the set of predetermined processing tools is not limited to these example tools and the set of predetermined processing tools may comprised more or less processing tools and/or processing tools of different types.

Further, as indicated in Figure 2, specification documents as input documents, for example such first, second and third specification documents 110, 120 and 130 as indicated in Figure 1, may be inputted into the group of LLM-based agents 210, as indicated in Figures 1 and 2 by the (processing) steps S110, S120 and S130. Further, from the group of agents 210, in step S140 according to Figure 2 and similarly indicated in Figure 1, as a main output, a structured representation of information is output. Such output structured representation of information may be understood as a target structured representation of information, for example such structured visualization 150 or a structural textual information 160 as indicated in Figure 1. Hence, the target structured representation of information, for example to be indicated with reference number 150 (or 160) may be a result of several modifying and/or verifying steps of one or more agents of the group of agents 210. It should be noted that in addition to such main output in step S140, an additional output may be provided which may comprise additional output explanations related to the main output as indicated in Figure 2.

In more detail, according to several examples of the present disclosure, a first specification document 110 may be input to the group of agents 210 in step S110. A type of information comprised by the first specification document 110 may be textual information or descriptive text (or data indicative thereof). Thus, based thereon, it may be determined that the text processing agent 214 processes the first specification document 110. The determining may be based on a task and role given to the text processing agent 214. For example, the text processing agent 214 may have been given the task to process input documents that comprise textual information or descriptive text, and may have been given the role to be the primary text processing agent, i.e. the first agent to process an input document that comprises textual information or descriptive text. Based on the given task and role, the text processing agent 214 has access to the ontology extractor tool 221, the unstructured data structurizer tool 222 and the text processing tool 223.

Returning back to the example with reference to the text processing agent 214, the text processing agent 214 may use one or more of the associated processing tools 221, 222 and 223 (the association based on the task and role given to the text processing agent 214) for processing the first specification document 110. For example, the text processing agent 214 may output as a result of the processing of the first specification document 110 a structured representation of information and may provide such result or such context to the synthesizer agent 215. Simultaneously or subsequently, the second specification document 120, that may comprise image data as a type of information, may be input to the image processing agent 213 that may have access to the image processing tool 223 for example. The image processing agent 213 may output a result or context of the processing to the synthesizer agent 215.

The synthesizer agent 215 may give feedback to each of the text processing agent 214 and the image processing agent 213 (or another modalities processing agent 212). Such feedback may comprise, for example, to do one or more iterations for further improving, verifying or redoing a result of the respective processing. For example, the synthesizer agent 215 may instruct a second agent for further processing a result from a first agent. For example, a result from a processing of the text processing agent 214 may be provided by the synthesizer agent 215 to the other modalities processing agent 212, in case such result may be obtained from an input document (input specification document) that comprises (textual information processed by the text processing agent 214 and also) numerical values or tables for example. According to several examples, one or more image processing agents or one or more text processing agents for example may be selected in a certain processing order for processing one or more specification documents based on a respective role assigned to the respective agents. For example, a first image processing agent may be assigned a role as the primary processing agent for image data, wherein a second image processing agent may be assigned a role as the subsequent image processing agent for image data.

Optionally, there may be the manager agent 211 as indicated in Figure 2, that may control any of the other agents and the processing of any of the other agents. For example, as indicated in Figure 2, the manager agent 211 may communicate with each of the other modalities processing agents 212, the image processing agent 213, and the text processing agent 214. With regard to the synthesizer agent 215, the synthesizer agent 215 may be controlled by the manager agent 211 for how to synthesize several results. For example, how to obtain a target structured representation of information from several structured representations of information obtained from several agents.

For example, according to predetermined evaluation criteria and/or rules, the synthesizer agent 215 may determine that an iteration of a result provided by the image processing agent 213 for example (or any agent) may be required.

According to several examples of the present disclosure, it may be said that the agents of the group of agents 210 are communicatively connected with each other and that they may interact with each other, for example directly or indirectly via the synthesizer agent 215 or via the manager agent 211. Moreover, it shall be noted that the agents in the group of agents 210 may discuss with each other about whether or not further processing or improving of a result may be required. This may be according to predetermined evaluation criteria and/or rules.

The processing tools of the set of processing tools may be based or may have access to a Process and Automation (P&A) Engineering Ontology and other information models 230.

According to several examples of the present disclosure, in view of the above, the present disclosure may disclose the following features:
First, a system and method for (in large parts) autonomous processing of engineering design specifications, with minimal human (corrective or confirmative) interaction where wanted or needed.
- The system or method being based on a "group of LLM-based agents".
- With the agents having different roles and tasks, thus representing different focus areas and capabilities.

With a subset of LLM-based agents being able to process different input data modalities, like image, text, etc., and being able to access and execute, also asynchronously, tools and to obtain feedback from them. With the tools preferably being versatile, e.g., accepting different image input formats, or markup vs. non-markup text, etc., fault-tolerant, i.e., failing gently, with error messages, and exception handling, and capable of caching information. With the agents and tools optionally set to ask for "human input", i.e., to have them ask for human feedback before outputting the result.
- With at least one agent with an aggregator or synthesizer role, and suitable task, to obtain from all other, e.g. above-mentioned, agents (i.e., the above agents with access to expert tools or models) structured outputs, i.e. structured representations of information. With the outputs having content, e.g., direct information about engineering specifications. With the outputs having meta data about the content, e.g., probabilities information and confidence information about the content. With the one or more agent(s) synthesizing the obtained outputs into one merged consistent output, thereby critically evaluating the provided single outputs, recognizing that some of them may be biased or incorrect or overlapping or contradicting.
- With at least one of the LLM-based agents having access to a domain knowledge representation system or a domain information model or a domain ontology, or similar/corresponding, and with at least one agent (that can be the same) being able to check for, e.g. maximizing, similarities and for guard-railing and staying inside of domain context. Which possibly happens in a loop with the aggregation or synthesizing task.
- With, optionally, an additional agent for summarizing the data processing, producing not the actual structured (e.g., JSON) output, but an additional summary of what was processed, where there are particular uncertainties, where there were contradictions, etc. for the human engineer. This agent may among others have access to RAG / Semantic Search tools.
- Optionally, with one of the LLM-based agents having a role as a "manager agent", which, based on language understanding, is managing (in the hierarchical and organizational sense) the other agents in the group, e.g., providing them with data, or giving them the turn to act now, or only after another agent has finished his task, and which is managing, based on language understanding, original and processed contents.
- Optionally, with at least one agent to find and provide, at least on request by the user, the sources of output results in the original documents, e.g., paragraphs in the CN text or parts in the P&ID image.

Second, the system and method being configured in a way such that it exposes, e.g. via console outputs, via a log file, or via a suitable user interface (III) in an engineering tool, the "internal discussion" among the group of agents to the user, so that:
- the user can follow the reasoning of the agents, and interact if/where needed,
- the user can always refer back to the respectively made decisions of the agents if needed in the post- or further processing.
- This group-of-agents-interaction history also guarantees detectability.

Third, optionally, the entire setup may be constrained by means of setting appropriate guardrails, which prevent agents from going into "rabbit holes", i.e. unproductive, repetitive loops, etc. This may be as simple as giving a threshold to the number of iterations an agent can undertake, as agents may otherwise iterate indefinitely, or other more complex, e.g., knowledge-driven, setups, too. This guard-railing could be done by means of an additional tool, too, and there could respectively also be a related agent for it with access to this tool.

Fourth, the system and method for the autonomous processing of the entirety of engineering design specifications or specification documents (for industrial automation, e.g., industrial process plants, discrete manufacturing plants, etc.) of a respective engineering project, i.e. input document or input data, into a structured and comprehensive representation, i.e. desired output, of the content of the (entirety of) input data. Which then is intended for the deterministic further-processing by means of traditional engineering tools and applications.

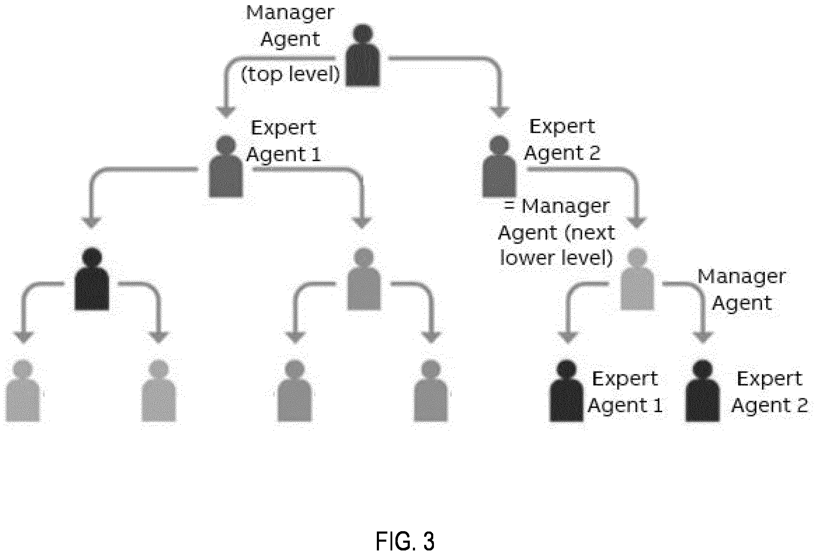

According to several examples of the present disclosure, it shall be noted that the proposed "group of agents" setup may very well be implemented across several hierarchical levels, too. E.g., to have a top-level group of agents, with a "manager agent" and some "expert agents", with these expert agents in turn being manager agents for their respectively own group of agents, as indicated in Figure 3. This may be reasonable particularly in cases where the expert agents would need to manage tasks that are themselves rather complex, such as the processing of P&ID images, which may require not only object detection, but also OCR, edge/connection detection, and/or ontology-extraction and/or ontology-alignment.

Hence, according to several examples of the present disclosure, with the proposed system, it is overcome an important showstopper for the implementation of the Engineering-Data-Funnel, to process a diverse range of strongly varying engineering design specifications (i.e. of strongly varying input data) from differing engineering projects, in a flexible way, which could not be described or programmed in a fixed, i.e. deterministic workflow otherwise. It is thus allowed to further reduce the manual work of a human engineering expert to process and evaluate/validate the Engineering-Data-Funnel outputs, down to an extent which by comparison in the loop could not further be achieved. Furthermore, through the system being configured in a way such that it discloses the group-of-agents' "in-ternal discussion" to the user, it is allowed to the user to follow the reasoning of the agents, and to interact if/where needed, and (2) it is enabled the user to always refer back to the respectively made decisions of the agents if needed in the post- or further processing.

According to several examples of the present disclosure, in the following, there is described, by means of exemplary implementation, features of the provided group-of-agents setup:
For the implementation, it may be made use of the open-source Python framework "crew.ai", but there are many alternative Python frameworks, packages, and libraries, which facilitate the same functionalities, such as MS AutoGen, LangChain, and others. Furthermore, at least one (or more) (e.g. locally deployed) Large Language Model (LLM), or several instances of it/them, is required; in the present case, it was used Mistral-7b through Ollama. Alternatively, this setup can also work with an LLM which is accessible via an API endpoint, e.g., made available by a cloud service provider, such as GPT-4o by OpenAI, or others.

Firstly, it was needed a set of tools, which can be accessed and executed by the agents. There are some "almost-standard tools", which are provided out-of-the-box e.g. from packages/libraries like crew.ai directly, and which can be imported or loaded and then simply be executed, such as a Web-Search Tool, a RAG Tool, and a File/Directory Reader Tool. Besides these standard tools, it was also defined and created a set of custom tools, e.g., for image and/or text processing, or for concept/relation extraction from a domain ontology or domain information model. Among others, it was created the following tools for example:
- Ontology Extractor Tool;
- Unstructured-based Structurizer Tool;
- Text Processing Tool; and
- Image Processing Tool (with and without OCR).

Every Tool has a unique 'name' and a 'description'. Every tool preferably is versatile, e.g., accepting different image input formats, or markup vs. non-markup text, or via JSON, etc., fault-tolerant, i.e., with default values/outputs, failing gently, with error messages, and exception handling, and capable of caching information, e.g., to make sure they need not to be run always from scratch, but can handle particular parts of image/text input data, too.

Using these tools, a human engineer, who can execute them would be able to accomplish a task of engineering data processing, namely by executing the tool based on the provided input data, and by then assessing the output (in a structured text format, such as JSON/RDF/XML/etc. for example) with his/her language understanding. Particularly, if a tool yields an output which is incorrect or partially correct only, the human engineer would be able to re-iterate using the tool for the specific, e.g., wrong, part, and thus come up with a better result.

In order to make a computer capable of doing so, too, it is needed to wrap the tool by a language understanding component, namely an LLM. Therefore, it is defined a group of LLM-based agents.

These agents have different roles and tasks, representing different focus areas and capabilities.

A subset of LLM-based agents is able to access and execute, also asynchronously, respectively a subset of the above-described tools and to obtain feedback from them, in order to process different input data modalities, like image, text, etc.

There may also be at least one agent with an aggregator or synthesizer role (and suitable task) to obtain from all other (e.g. above-mentioned) agents, i.e., the above agents with access to expert tools or models, structured outputs. With the outputs having content, e.g., direct information about engineering specifications. With the outputs having meta data about the content, e.g., probabilities information and confidence information about the content. With the one or more agent(s) synthesizing the obtained outputs into one merged consistent output, thereby critically evaluating the provided single outputs, recognizing that some of them may be biased or incorrect or overlapping or reinforcing or contradicting.

There may also be at least one of the LLM-based agents having access to a domain knowledge representation system or a domain information model or a domain ontology (or similar/corresponding), and with at least one agent (that can be the same) being able to check for, e.g. maximizing, similarities and for guard-railing and staying inside of domain context. This can possibly happen in a loop with the aggregation or synthesizing task.

Optionally, there may also be one of the LLM-based agents having a role as a "manager agent". This agent, based on language understanding, is managing in the hierarchical and organizational sense the other agents in the group, e.g., providing them with data, or giving them the turn to act now, or only after another agent has finished his task, and it is managing, based on language understanding, original and processed contents.

Optionally, there may also be an agent to find and provide, at least on request by the user, the sources of output results in the original documents, e.g., paragraphs in the CN text or parts in the P&ID image.

It shall be noted that each of the agents may have access to a domain information model or domain ontology, in order to, e.g., check the obtained output for consistency with given ontological concepts and relations. Some or all processing tools may have the functionality to provide not only the directly content-related information, e.g., what components they detected in the P&ID image, but also meta-information, such as confidence values, or uncertainty measures, or simply probabilities for that the detected symbol is a symbol X or a symbol Y.

It shall be noted that this may be both, on the single-modal or tool level, and/or also on the multimodal-synthesizer-tool level.

The confidence information, like confidence scores or probabilities, obtained by an agent X may well be used by another agent Y, too. Particularly, the confidence information from two or more agents X and Y may be used by a further agent Z, e.g., an aggregator agent.

The system and method can be configured in a way such that it exposes, e.g., via console outputs or via a suitable UI in the engineering tool, the "internal discussion" among the group of agents to the user, so that (1) the user can follow the reasoning of the agents, and interact if/where needed, and (2) the user can always refer back to the respectively made decisions of the agents if needed in the post- or further processing. This group-of-agents-interaction history also guarantees detectability.

According to several examples of the present disclosure, the provided system and method may be intended for the autonomous processing of the entirety of engineering design specifications of a respective engineering project (i.e., the input data) into a structured and comprehensive representation (i.e., the output) of the content of the (entirety of) input data, which in turn then may be intended for the deterministic further-processing by means of traditional, existing engineering tools or applications.

According to several examples of the present disclosure, as already briefly outlined above, the disclosed "group of agents" setup may very well be implemented across several hierarchical levels, too. E.g., to have a top-level group of agents, with a "manager agent" and some "expert agents", with these expert agents in turn being manager agents for their respectively own group of agents, as indicated in Figure 3. This may be reasonable particularly in cases where the expert agents would need to manage tasks that are themselves rather complex, such as the processing of P&ID images, which may require not only object detection, but also OCR, edge/connection detection, and/or ontology-extraction and/or ontology-alignment.

Regarding the implementation, this could be implemented, e.g., using crew.ai's 'process' class, which allows for, e.g., sequential or hierarchical process setups. Also, it shall be noted, that particularly in case of a manager agent it may make sense to have the manager agent being based on a particularly strong or capable LLM. The manager agent may possibly have the single task of acting as a routing agent, to route input or interim data to suitable (respectively next) agents.

Moreover, it shall be remarked that, optionally, the entire Group-of-Agents (GoA) Engineering-Data-Funnel setup may be constrained by means of setting appropriate guardrails, which may prevent agents from going into "rabbit holes", i.e. unproductive, repetitive loops, etc. This may be as simple as giving a threshold to the number of iterations an agent can undertake, as agents may otherwise iterate indefinitely, or other more complex, e.g., knowledge-driven, setups, too.

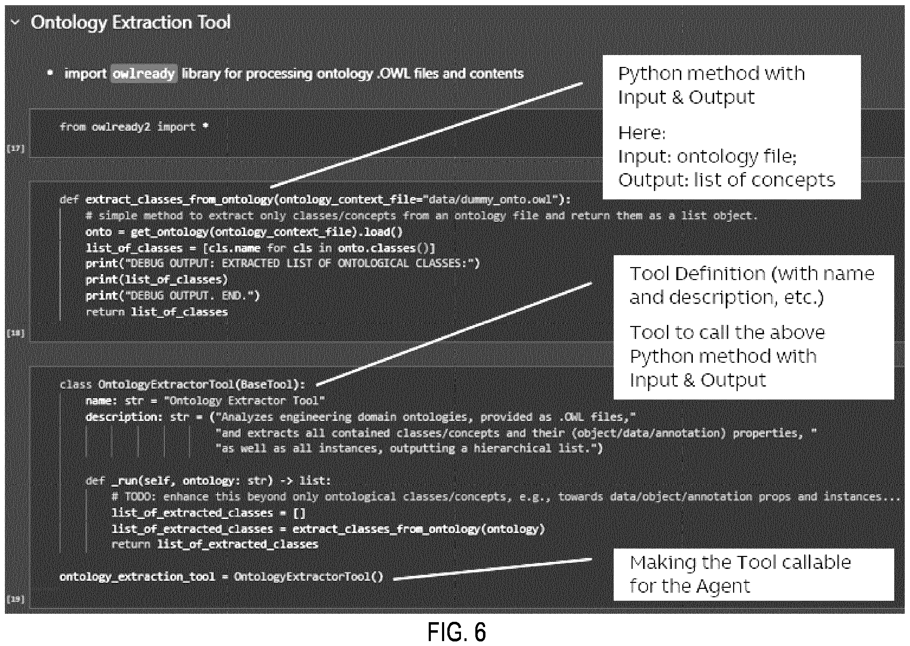

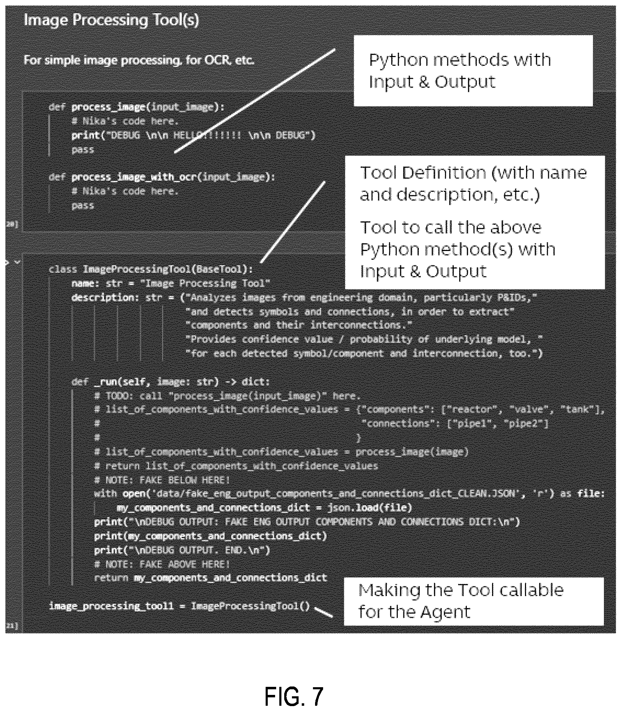

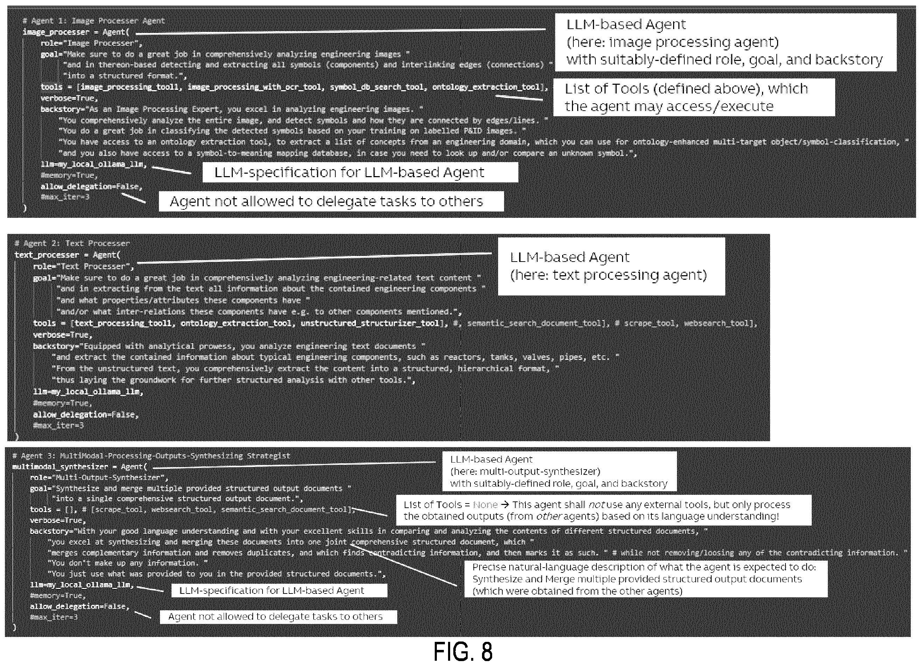

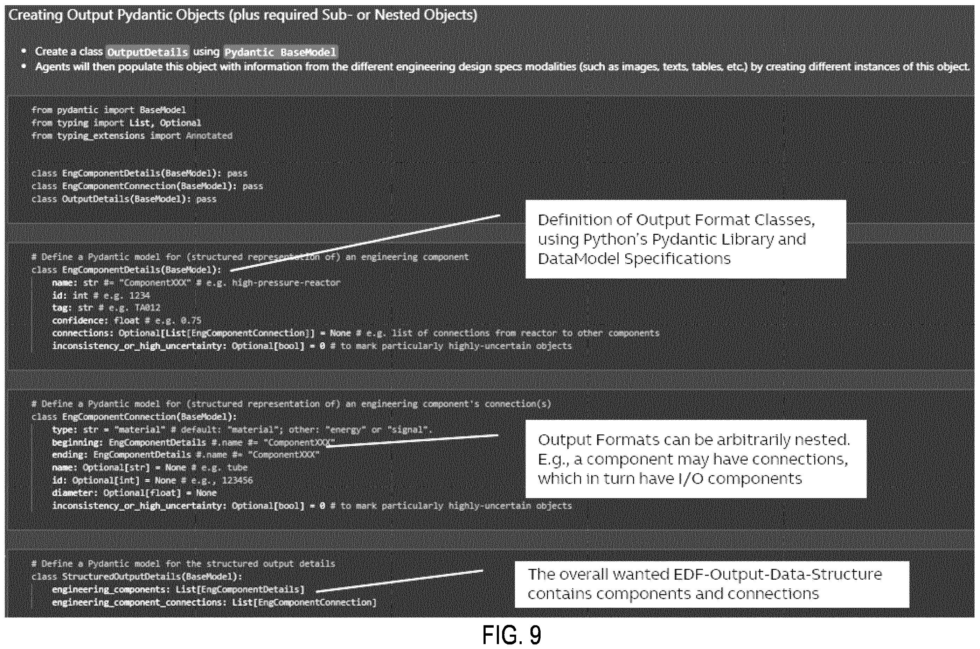

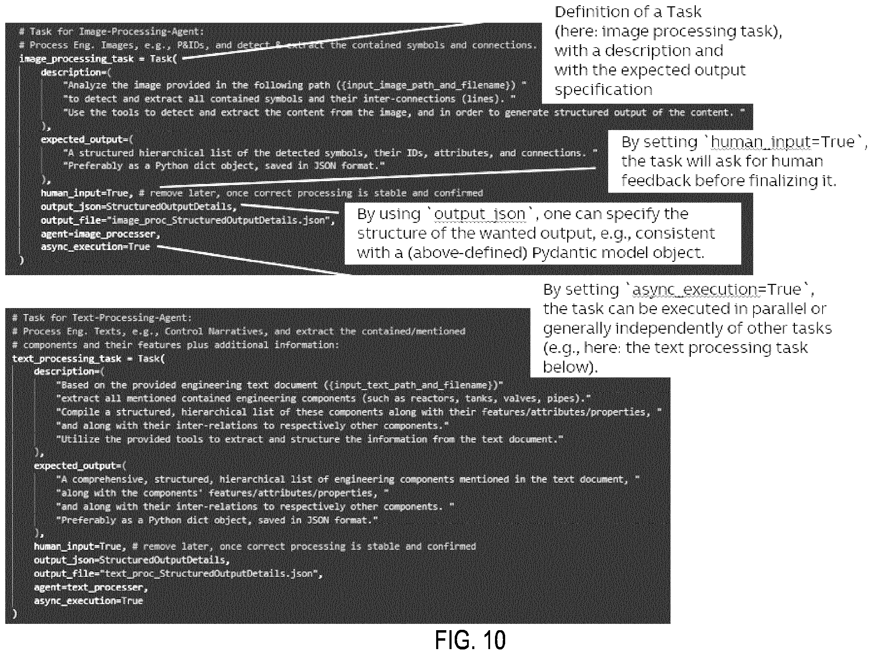

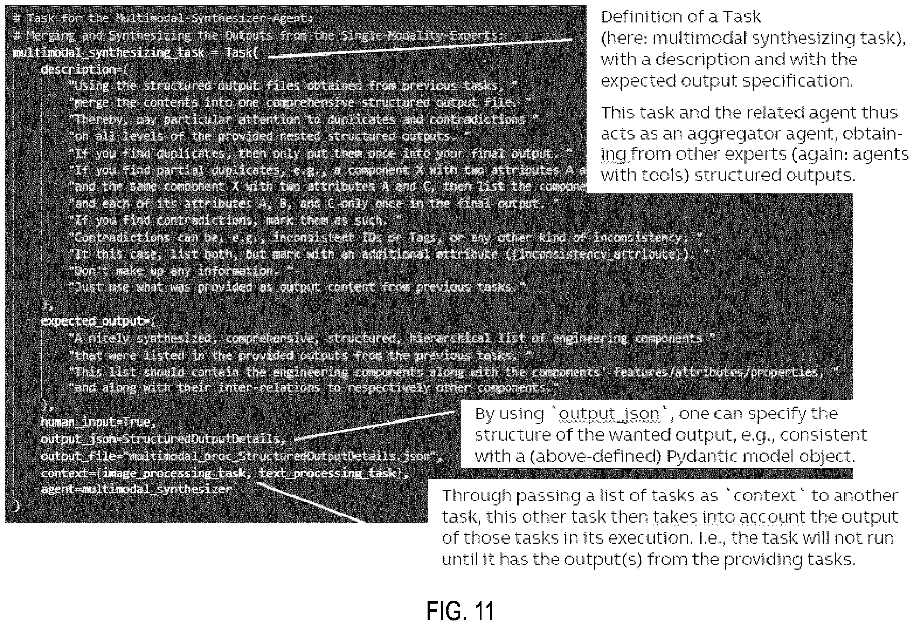

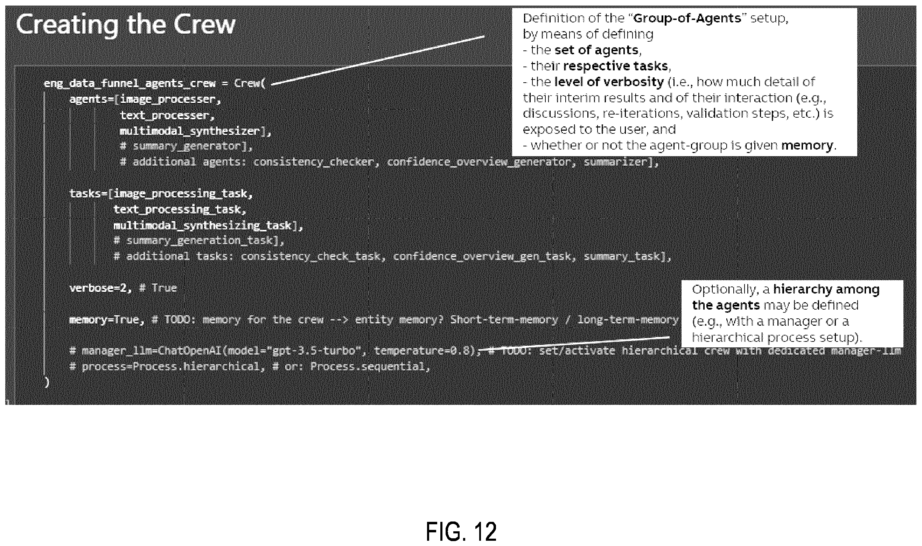

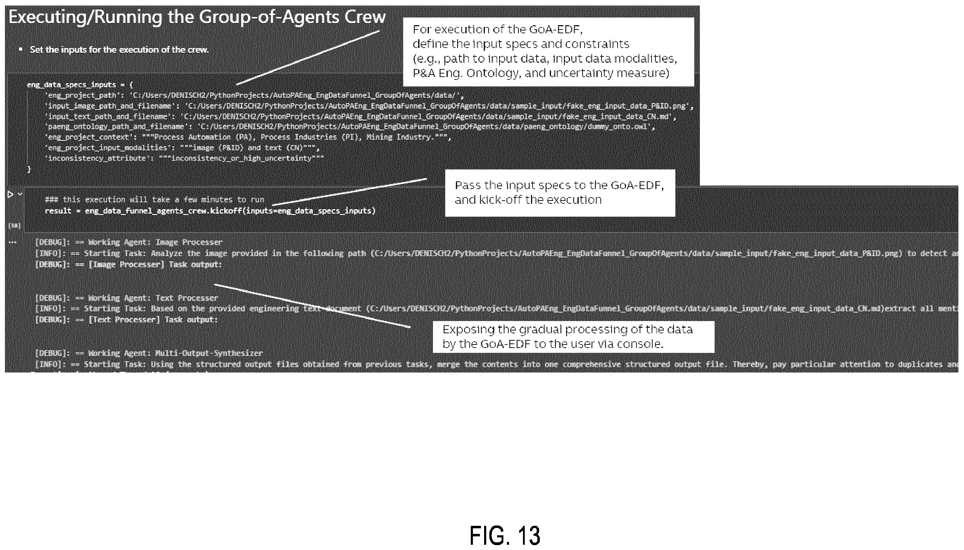

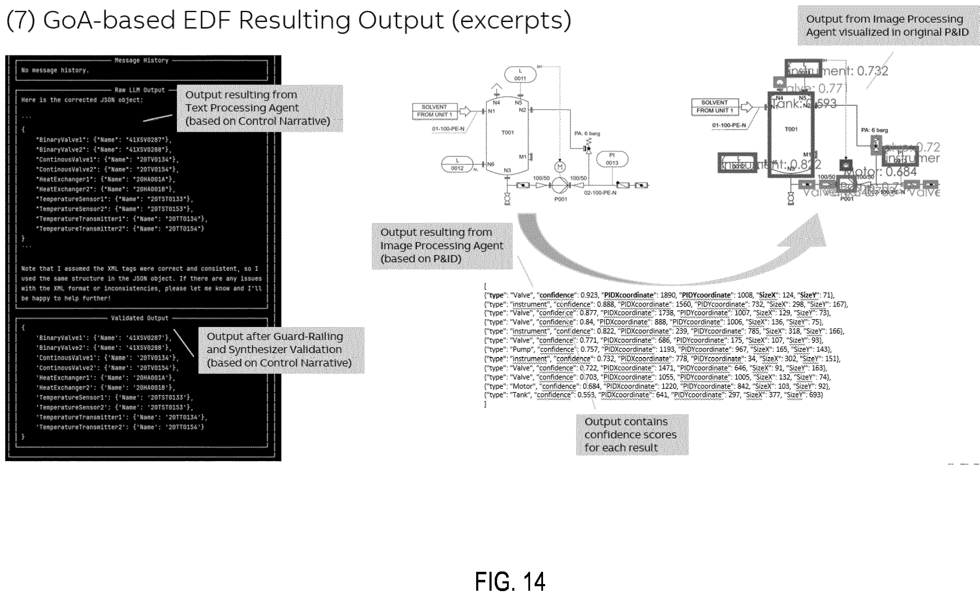

Figure 6 to 14 illustrate an example overview for implementing the interacting group of LLM-based agents according to several examples of the present disclosure. However, it shall be noted that an implementation of the group of LLM-based agents is not limited to such example overview, and that the group of LLM-based agents may in general be implemented in a different way.

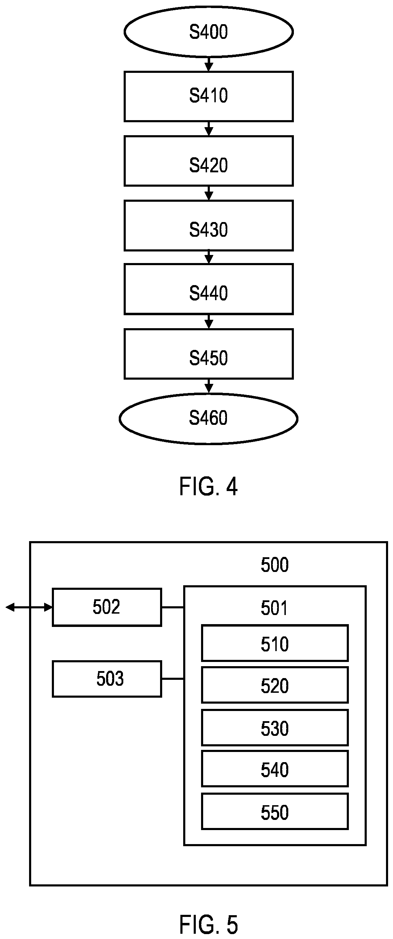

Referring now to Figure 4, Figure 4 illustrates a flowchart indicative of a method according to several examples of the present disclosure. The method is for obtaining a target structured representation of information from one or more documents indicative of a same process plant by using an interacting group of LLM-based agents in an industrial plant context.

According to several examples of the present disclosure, the EDF 140 or the EDF system 100 according to Figure 1, or more specifically, the group of LLM-based agents 210 or the system 200 according to Figure 2 may be configured to perform the method as illustrated according to Figure 4.

The method starts in S400.

In S410, the method comprises obtaining at least one document 110, 120, 130 of the one or more documents at the group of LLM-based agents 210. Each LLM-based agent from the group of LLM-based agents 210 is given one task and one role, and is associated with one or more data processing tools from a set of predetermined data processing tools based on the given task and role.

In S420, the method comprises selecting two or more LLM-based agents from the group of LLM-based agents 210 for processing the document 110, 120, 130. The selecting comprises determining one or more types of information included in the document 110, 120, 130, and selecting LLM-based agents that are associated with data processing tools applicable for processing at least one type of information of the determined one or more types of information. It shall be noted that the selected two or more LLM-based agents may comprise one or more LLM-based agents that control or manage selected LLM-based agents that perform a processing of the at least one type of information. The processing the at least one type of information may also be understood as a further processing of a processing result of a processing of the at least one type of information.

In S430, the method comprises processing, by one selected agent of the selected two or more LLM-based agents, the document and outputting a structured representation of information as a result of the processing.

In S440, the method comprises interacting of the selected two or more LLM-based agents in relation to the structured representation of information and based on the tasks and roles given to the selected two or more LLM-based agents. The interacting comprises modifying and/or approving the structured representation of information based on feedback provided on the structured representation of information by at least one further LLM-based agent of the selected two or more LLM-based agents as the one selected LLM-based agent.

In S450, the method comprises obtaining the target structured representation of information 150 based on a result of the interacting.

The method ends in S460.

According to several examples of the present application, a specific example may be as follows.

Referring now to Figure 5, Figure 5 shows a block diagram schematically illustrating a data processing apparatus 500 according to several examples of the present disclosure. In particular, according to several examples of the present disclosure, there is provided a data processing apparatus 500 for obtaining a target structured representation of information from one or more documents indicative of a same process plant in an industrial plant context. The data processing apparatus 500 comprises a processor 501 being configured to carry out the method of Figure 4.

According to several examples of the present disclosure, the data processing apparatus 500 may comprise means to function as such group of LLM-based agents 210 as outlined above with reference to Figure 2.

In more detail, according to various examples, a data processing apparatus 500 being configured to carry out the method of Figure 4 may comprise a processing circuitry, a processing function, a processing means, a processing unit or a processor 501, which enables the data processing apparatus 500 to participate to obtain a target structured representation of information from one or more documents indicative of a same process plant in an industrial plant context. The processor 501 may comprise one or more processing portions or functions, wherein the processing portions or functions may be provided as one or more physical or virtual entities. The data processing apparatus 500 may comprise one or more communication interfaces 502. The data processing apparatus 500 may further comprise a memory or memory unit 503 for storing data, programs and/or instructions to be executed by the processor. The memory 503 may be a memory internal to the data processing apparatus 500 or may be a memory external to the data processing apparatus 500, for example at a cloud server. The processor 501 may comprise one or more portions, which enable the data processing apparatus 500 to execute the method of Figure 4 for example. According to several examples of the present disclosure, an obtaining portion 510 may be configured to perform such obtaining according to S410 of Figure 4, a selecting portion 520 may be configured to perform such selecting according to S420 of Figure 4, a processing portion 530 may be configured to perform such processing according to S430 of Figure 4, an interacting portion 540 may be configured to perform such interacting according to S440 of Figure 4, and an obtaining portion 550 may be configured to perform such obtaining according to S450 of Figure 4.

According to several examples of the present disclosure, the respective portions of the data processing apparatus 500 may also be understood as means for carrying out the certain function.

According to several examples of the present disclosure, there is provided a data processing system for obtaining a target structured representation of information from one or more documents indicative of a same process plant in an industrial plant context. The data processing system comprises the data processing apparatus 500 according to Figure 5 and/or comprises means for carrying out the method according to Figure 4. The data processing system may represent such EDF system 100 as outlined above with reference to Figure 1 or in particular such EDF system 200 as outlined above with reference to Figure 2.

According to several examples of the present disclosure, there is provided an industrial plant comprising the data processing apparatus 500 according to Figure 5 and/or the data processing system as outlined above.

According to several examples of the present disclosure, there is provided a computer-readable medium comprising instructions which, when executed by a computing system, causes the computing system to perform the method according to Figure 4. The computer-readable medium may be transitory or non-transitory, volatile or non-volatile.

According to several examples of the present disclosure, there is provided a computer program product comprising instructions which, when executed by a computing system, enable or cause the computing system to perform the method according to Figure 4. The computer program product may comprise a computer-readable medium comprising instructions of the computer program product. The computer-readable medium as mentioned above may have stored thereon the computer program product.

According to several examples of the present disclosure, there is provided a use of the data processing apparatus 500, the data processing system as outlined above, the industrial plant as outlined above, the computer-readable medium as outlined above and/or the computer program product as outlined above.

The method according to Figure 4 may be at least in parts computer implemented. Preferably, the method according to Figure 4 is computer implemented.

Optional features of the method according to Figure 4 may form part of the data processing apparatus 500, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for obtaining a target structured representation of information (150) from one or more documents (110, 120, 130) indicative of a same process plant by using an interacting group of large language model, LLM, -based agents (210) in an industrial plant context, the method comprising:
obtaining (S410) at least one document (110; 120; 130) of the one or more documents at the group of LLM-based agents (210),
wherein each LLM-based agent (211, 212, 213, 214, 215, 216, 216) from the group of LLM-based agents (210) is given one task and one role, and is associated with one or more data processing tools from a set of predetermined data processing tools (221, 222, 223, 224, 225, 226, 227, 228) based on the given task and role;
selecting (S420) two or more LLM-based agents (212; 213; 214; 215) from the group of LLM-based agents for processing the document (110; 120; 130),
wherein the selecting comprises
determining one or more types of information included in the document, and
selecting LLM-based agents that are associated with data processing tools (221; 222; 223; 224; 225) applicable for processing at least one type of information of the determined one or more types of information;
processing (S430), by one selected agent (214) of the selected two or more LLM-based agents (212; 213; 214; 215), the document (110) and outputting a structured representation of information as a result of the processing;
interacting (S440) of the selected two or more LLM-based agents (212; 213; 214; 215) in relation to the structured representation of information and based on the tasks and roles given to the selected two or more LLM-based agents (212; 213; 214; 215),
wherein the interacting comprises
modifying and/or approving the structured representation of information based on feedback provided on the structured representation of information by at least one further LLM-based agent (215) of the selected two or more LLM-based agents (212; 213; 214; 215) as the one selected LLM-based agent (214); and
obtaining (S450; S140) the target structured representation of information (150) based on a result of the interacting.

2. The method according to claim 1,
wherein the at least one type of information is at least one of an image, a descriptive text, a table, a numerical value, data indicative of an image, data indicative of a descriptive text, data indicative of a table, and data indicative of a numerical value,
wherein the group of predetermined data processing tools comprises processing tools applicable for processing an image, a descriptive text, a table, a numerical value, data indicative of an image, data indicative of a descriptive text, data indicative of a table, and data indicative of a numerical value, wherein the document is an input document to be input into the group of LLM-based agents and is a document comprising at least one of an image, a descriptive text, a table, a numerical value, data indicative of an image, data indicative of a descriptive text, data indicative of a table, and data indicative of a numerical value in an industrial plant context,
wherein the document is an engineering design specification.

3. The method according to claim 1 or 2, wherein the interacting comprises at least one of:
assessing, by the at least one further LLM-based agent, the structured representation of information, and providing a result of the assessing as the feedback,
comparing, by the at least one further LLM-based agent, the structured representation of information with another structured representation of information obtained from the document or from another document of the at least one document, and providing a result of the comparing as the feedback, discussing, by the at least one further LLM-based agent, the structured representation of information with another selected LLM-based agent from the selected two or more LLM-based agents, and providing a result of the discussing as the feedback, and
iterating, by a selected LLM-based agent from the selected two or more LLM-based agents, a processing of the structured representation of information, and providing a result of the iterating as the feedback.

4. The method according to any of claims 1 to 3, wherein the modifying comprises continuing or repeating the modifying until the target structured representation of information satisfies predetermined criteria, based on the selected two or more LLM-based agents using their LLM-based understanding of result content and interaction.

5. The method according to any of claims 1 to 4, wherein two or more LLM-based agents of the group of LLM-based agents, that are given different tasks and roles, are associated with the same set of data processing tools, from which they can arbitrarily chose.

6. The method according to any of claims 1 to 5, wherein the interacting further comprises exposing at least one of the following of the interacting of the selected two or more LLM-based agents to a user: a process, a state of a processing, an intermediate result of a processing, a discussion among the selected two or more LLM-based agents, and a made decision of one of the selected two or more LLM-based agents.

7. The method according to any of claims 1 to 6, wherein each LLM-based agent of the group of LLM-based agents has its own expert understanding, based on its role and task description and based on its language understanding capabilities.

8. The method according to any of claims 1 to 7,
wherein the LLM-based agents of the group of LLM-based agents are in a hierarchical setup comprising two or more hierarchy levels;
wherein, in case of a hierarchical setup being present, the group of LLM-based agents comprises a manager LLM-based agent (211), and wherein the method further comprises controlling, by the manager LLM-based agent, an interacting between the LLM-based agents of the group of LLM-based agents including the interacting between the selected two or more LLM-based agents.

9. The method according to any of claims 1 to 8, wherein the group of LLM-based agents comprises an aggregator LLM-based agent (215), and wherein the method further comprises aggregating, by the aggregator LLM-based agent, two or more structured representations of information output from the selected two or more LLM-based agents into one structured representation of information, wherein the target structured representation of information is obtained by the aggregator LLM-based agent based on a result of one or more aggregating processes.

10. The method according to any of claims 1 to 9, further comprising waiting of a selected LLM-based agent and/or of a data processing tool associated with the selected LLM-based agent for feedback provided by a human user in relation to a respectively generated processing result; and outputting the generated processing result based on the feedback provided by the human user.

11. The method according to any of claims 1 to 10,
wherein the group of LLM-based agents comprises one or more LLM-based agents serving as a domain knowledge permitting, modifying or comparing LLM-based agent, the domain knowledge permitting, modifying or comparing LLM-based agent having access to a predetermined domain knowledge representation system associated with a domain of interest, to a predetermined domain information model associated with the domain of interest and/or to a predetermined domain ontology associated with the domain of interest; and wherein the method further comprises permitting, by the domain knowledge permitting, modifying or comparing LLM-based agent, a selected LLM-based agent to output a structured representation of information, if a content of information comprised by the structured representation of information is inside the domain of interest; and/or
wherein the method further comprises modifying, by the domain knowledge permitting, modifying or comparing LLM-based agent, a content of information comprised by a structured representation of information generated by a selected LLM-based agent to be inside the domain of interest; and/or wherein the method further comprises comparing, by the domain knowledge permitting, modifying or comparing LLM-based agent, a content of information comprised by a structured representation of information generated by a selected LLM-based agent to be similar to or different from an item in the domain knowledge representation system.

12. The method according to any of claims 1 to 11, wherein the group of LLM-based agents comprises a source finding LLM-based agent, and wherein the method further comprises finding, by the source finding LLM-based agent, one or more sources of output results in the document, wherein the output results are included in a structured representation of information output by a selected LLM-based agent.

13. A data processing apparatus (500) for obtaining a target structured representation of information from one or more documents indicative of a same process plant in an industrial plant context, the data processing apparatus comprising a processor being configured to carry out the method of any of claims 1 to 12.

14. A computer program product comprising instructions which, when executed by a computing system, enable and/or cause the computing system to perform the method of any of claims 1 to 12.

15. A computer-readable medium having stored thereon the computer program product according to claim 14.
